# EUROPEAN PATENT APPLICATION

(11) **EP 3 118 265 A1**
(43) Date of publication of application: **18.01.2017**
(21) Application number: 15176609.4
(22) Date of filing: 14.07.2015
(51) Int. Cl.: C09D 5/00

(54) **CONDUCTIVE TRANSPARENT COATING**

(71) Applicant: Henkel AG & Co. KGaA, 40589 Düsseldorf (DE); Henkel IP & Holding GmbH, 40589 Düsseldorf (DE)
(72) Inventor: GARCIA MIRALLES, Jose, 40217 Düsseldorf (DE); SALHI, Fouad, 08195 Barcelona (ES); ESTRUGA, Marc, 08211 Barcelona (ES); ALMARZA MARTINEZ, Albert, 08027 Barcelona (ES); DE MENDIZABAL ZALAIKIN, Julen, 08029 Barcelona (ES)

(57) **Abstract**

The present invention relates to conductive coating compositions based on an organic matrix and anisotropic nanoparticles. The coating has excellent optical properties, excellent electrical conductivity and good humidity barrier properties. The present invention encompasses use of the conductive coating composition as an ITO replacement in various applications.

## Description

### Technical field

The present invention relates to a transparent conductive coating based on an organic matrix and anisotropic nanoparticles. The coating has excellent optical properties, excellent electrical conductivity and good humidity barrier properties.

### Background of the invention

Many conductive coatings include a metal, such as silver, copper or aluminium, in a resin (binder) or resin (binding) medium. While such coatings produce conductors upon curing, which are substantially conductive and have a comparatively low electrical resistance (or impedance), the resulting conductors are substantially opaque and do not allow the transmission of any appreciable amount of light in the visual spectrum or other important spectra, such as ultraviolet and infrared spectra. However, optically transparent conductors are needed in a wide variety of applications.

Transparent conductors refer to thin conductive films coated on high-transmittance insulating surfaces or substrates. Transparent conductors may be manufactured to have surface conductivity, while maintaining reasonable optical transparency. Such surface conducting transparent conductors are widely used as transparent electrodes for example in flat liquid crystal displays, touch panels, electroluminescent devices, and thin film photovoltaic cells, as anti-static layers and as electromagnetic wave shielding layers.

A transparent conductive coating is needed for touch screens to operate the devices (tablets, smart phones etc.) via finger touch (for example resistive or projective capacitive). For the capacitive touch screens a high resolution pattern of the transparent conductive layer is required. The use of flexible plastic films instead of glass substrates enable a weight reduction and also enable the production of flexible touch screens, what opens a completely new area of applications.

Typical printable transparent conductors, have reasonable optical transparency, however, they often have a comparatively high electrical resistance and low conductivity when cured, with resistances typically in the range of 800 - 1000 or more ohms per square (e.g., polyethylene-dioxithiophene). Vacuum deposited metal oxides, such as indium tin oxide (ITO), are commonly used industry standard materials. These metal oxides provide optical transparency and electrical conductivity to dielectric surfaces such as glass and polymeric films. However, metal oxide films are fragile and prone to damage during bending or other physical stresses. They also require elevated deposition temperatures and/or high annealing temperatures to achieve high conductivity levels. There may also be issues with the adhesion of metal oxide films to substrates that are prone to absorbing moisture such as plastic and organic substrates, e.g. polycarbonates. Applications of metal oxide films on flexible substrates are therefore severely limited. In addition, vacuum deposition is a costly process and requires specialized equipment. Moreover, the process of vacuum deposition is not conducive to form patterns and circuits, which typically leads in the need for expensive patterning processes such as photolithography.

Typical conductive coatings formulations are designed to maximize the compatibility of the three components; the polymer, the anisotropic conductive particles and the solvent. This usually requires the use of highly polar polymers such as polyvinylpyrrolidone (PVP), polyvinylalcohol (PVA) or hydroxypropyl methylcellulose (HPMC), among others. The main advantage of those polymers is their good compatibility with a wide range of anisotropic conductive particles and their good solubility in a wide range of common solvents such as water, alcohols, ketones, etc. However, that same relatively high polymer polarity implies a poor film stability against humidity, and therefore, negatively affecting the optical and electrical properties of the film in the long term. This leads to a requirement for a transparent protective overcoat layer with better moisture barrier properties.

The typical approach to improve the humidity barrier properties of transparent conductive coating (film) is to deposit an additional polymer layer on top, which is known as protective overcoat. Usually, the overcoat polymer is obtained by thermal or light-induced crosslinking of acrylate monomers and/or oligomers or polymers.

There are two main strategies to apply the overcoat protective films.

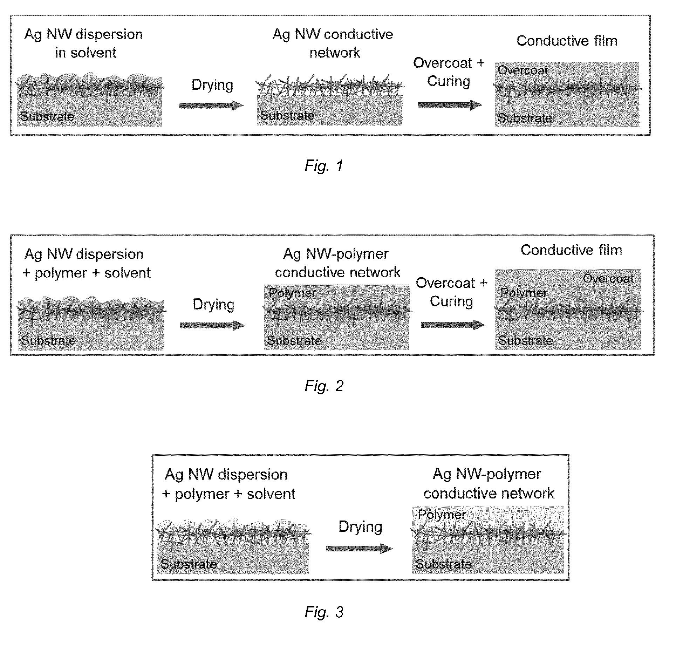

One approach consists on dispersing the anisotropic conductive particles in a solvent of choice, typically isopropanol or ethanol, without including the polymer in the formulation. Subsequently, the solvent is evaporated in a thermal drying stage, resulting in a conductive network on the substrate. Subsequently, polymer solutions or liquid monomers and/or oligomers are cast on top to fill up the voids between the particles and the crosslinking of the acrylate is initiated either thermally or photochemically. After these two steps, the film consists of a conductive network embedded in a matrix with good humidity barrier resistance. This process is illustrated in figure 1.

Alternatively, a conventional conductive coating containing a polar polymer (PVP, PVA, or HPMC, among others), a plurality of anisotropic conductive particles and, at least, one solvent, can be coated on the substrate of choice. In this process, the anisotropic particles are embedded in the polar matrix film, after thermal drying and evaporation of the solvent. However, formed film has poor barrier properties. To avoid its degradation, the protective overcoat is immediately deposited, and cured via thermal or photo-induced crosslinking. This process illustrated in figure 2.

In order to obtain a transparent conductive film with stable performance over time, a protective overcoat film is always mandatory, which increases the process complexity, time and device cost.

Therefore, there is a need for a conductive coating composition, providing improved barrier properties, while formed film maintains optical and electrical properties.

### Summary of the invention

The present invention relates to a conductive coating composition comprising a methacrylate resin selected from the group consisting of a hydroxyalkyl methacrylate copolymer resin comprising at least one alkyl methacrylate monomer and at least one hydroxyalkyl methacrylate monomer and tert-butyl methacrylate homopolymer resin; a plurality of anisotropic nanoparticles; and at least one solvent.

The present invention also relates to a cured reaction product of the conductive coating composition according to the present invention.

The present invention encompasses a coated substrate comprising a layer of conductive coating composition according to the present invention, wherein said layer is thermally cured or dried.

The present invention also encompasses use of conductive coating composition according to any of the present invention in transparent electrode or conductor applications.

The present invention also encompasses use of conductive coating composition according to the present invention as an ITO replacement in transparent electrode or conductor applications or as an electroluminescent lighting or as a transparent electrode in flexible or rigid touch panels or OLED displays or smart windows or transparent heaters or thin film photovoltaics or dye sensitized photovoltaics or organic photovoltaics or electromagnetic interference shielding or electrostatic discharge or membrane switches.

Short description of the figures
Figure 1 illustrates a structure and preparation method of a protective overcoat on top of conductive particles.
Figure 2 illustrates a structure and preparation method of a film having a protective overcoat on top of film comprising conductive particles.
Figure 3 illustrates a structure and preparation method according to the present invention.

### Detailed description of the invention

In the following passages, the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical end points includes all numbers and fractions subsumed within the respective ranges, as well as the recited end points.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

All references cited in the present specification are hereby incorporated by reference in their entirety.

Unless otherwise defined, all terms used in the disclosing the invention, including technical and scientific terms, have the meaning as commonly understood by one of the ordinary skill in the art to which this invention belongs to. By means of further guidance, term definitions are included to better appreciate the teaching of the present invention.

The present invention provides a conductive coating composition comprising a methacrylate resin selected from the group consisting of a hydroxyalkyl methacrylate copolymer resin comprising at least one alkyl methacrylate monomer and at least one hydroxyalkyl methacrylate monomer and tert-butyl methacrylate homopolymer resin; a plurality of anisotropic nanoparticles; and at least one solvent.

A conductive coating composition according to the present invention is preferably in the form of an ink.

The favourable interaction between alkyl-methacrylate polymers, anisotropic conductive particles and solvent allows formation of a stable composition. Compositions according to the present invention can be prepared in several ways of mixing all ingredients together. A conductive coating composition according to the present invention is used to obtain a transparent conductive film, which consists of a conductive anisotropic particle network embedded in a polymer matrix with good humidity barrier resistance, while maintaining excellent optical and electrical properties. The structure of the coating according to the present invention is illustrated in figure 3.

Preferably, the thin films that result from the conductive coating composition according to the present invention provide high transparency (T), low haze (H), low colour (b*) and low sheet resistance (Rs).

Each of the essential components of the conductive coating composition according to the present invention are described in details below.

### Methacrylate resin

The conductive coating composition according to the present invention comprises a methacrylate resin selected from the group consisting of a hydroxyalkyl methacrylate copolymer resin comprising at least one alkyl methacrylate monomer and at least one hydroxyalkyl methacrylate monomer and tert-butyl methacrylate homopolymer resin.

In one embodiment, the methacrylate resin is a hydroxyalkyl methacrylate copolymer resin comprising at least one alkyl methacrylate monomer and at least one hydroxyalkyl methacrylate monomer. The alkyl groups of alkyl methacrylate monomer and hydroxyalkyl methacrylate monomer are independently selected from the group consisting of methyl, ethyl, propyl, butyl, pentyl hexyl, heptyl, octyl and their ramified isomers.

Preferably, alkyl group of alkyl methacrylate monomer is methyl methacrylate.

Preferably, alkyl group of hydroxyalkyl methacrylate monomer is selected from 2-hydroxyethyl methacrylate, 2-hydroxypropyl methacrylate and mixtures thereof.

A hydroxyalkyl methacrylate copolymer resin according to the present invention comprises from 0 to percentage 25 fractions of methacrylic acid comonomer, from 0 to 100 percentage fractions of alkyl methacrylate comonomer, and from 0 to 20 percentage fractions of hydroxyalkyl methacrylate comonomer. Preferably, a hydroxyalkyl methacrylate copolymer resin according to the present invention comprises from 1 to 25 percentage fractions of methacrylic acid comonomer, from 1 to 100 percentage fractions of alkyl methacrylate comonomer, and from 1 to 20 percentage fractions of hydroxyalkyl methacrylate comonomer.

In another embodiment, the methacrylate resin is tert-butyl methacrylate homopolymer resin.

Preferred resins mentioned herein enable formation of transparent low haze films. In addition, preferred resins enable good dispersion of anisotropic nanoparticles, and therefore, provide good conductivity.

Suitable methacrylate resin for use in the present invention has a molecular weight (Mₙ) from 6000 to 200000 g/mol, preferably from 25000 to 150000 g/mol, and most preferably from 35000 to 120000 g/mol. A molecular weight of a methacrylate resin refers to the average number molecular weight Mₙ, if not explicitly stated otherwise. The number average molecular weight Mₙ of a methacrylate resin, for example, can be determined by gel permeation chromatography according to DIN 55672-1:2007-08 with THF as the eluent. If not stated otherwise, all given molecular weights are those determined by GPC, calibrated with polystyrene standards. The weight average molecular weight M_{w} can also be determined by GPC, as described for Mₙ.

Preferred molecular weight range (Mn) provides desired mechanical properties. The molecular weight below 6000 would result in too low Tg values, and on the other hand molecular weight above 200000 would result polymer with poor solubility to required solvents.

Suitable methacrylate resin for use in the present invention has a Tg from 50 - 111°C, preferably from 96 to 106°C. Tg is measured by dynamic scanning calorimetry (DSC), scanning from -80 to 150°C at 10°C/min.

Preferred Tg range provides ideal mechanical properties for the polymer. Tg value below 50 °C would result in too flexible polymer, whereas Tg value above 111 °C would result in too rigid and brittle polymer.

Examples of suitable commercially available methacrylate resins for use in the present invention are alkyl-methacrylate co- and homopolymer derivatives from Sigma Aldrich.

A conductive coating composition according to the present invention comprises a methacrylate resin from 0.05 to 5% by weight of the total weight of the conductive coating composition, preferably from 0.07 to 1.5%, more preferably from 0.09 to 0.65 and most preferably from 0.1 to 0.15%.

Higher quantity of the methacrylate resin (more than 5%), leads too high thickness and viscosity of the composition. Higher quantity would also have difficulties to dissolve to the required solvent quantity. Too high resin quantity also would disturb the anisotropic nanoparticles to resin ratio, and therefore, have a negative effect on electrical and optical properties of the composition. On the other hand, lower quantity than 0.05% would result in heterogeneous transparent film after drying, which is not desired.

In one highly preferred embodiment, said methacrylate resin is tert-butyl methacrylate homopolymer, having Mw about 120000 g/mol and Tg of 106 °C. This particular resin, enables formation of transparent low haze films. In addition, this particular resin enables good dispersion of anisotropic nanoparticles, and therefore, provides good conductivity.

### Anisotropic nanoparticles

The conductive coating composition according to the present invention comprises a plurality of anisotropic nanoparticles.

Suitable anisotropic nanoparticles for use in the present invention are selected from the group consisting of silver containing particles, silver particles, copper particles, copper containing particles, silver nanowires, copper nanowires, carbon particles, carbon nanowires and mixtures thereof, preferably plurality of anisotropic nanoparticles is selected from the group consisting of silver containing particles, silver particles and silver nanowires, and most preferably anisotropic particles are silver nanowires.

Suitable anisotropic nanoparticles for use in the present invention have an aspect ratio greater than 200, preferably from 200 to 2000, more preferably from 400 to 1500, more preferably from 500 to 1200, and most preferably from 800 to 1000.

"Aspect ratio" as employed herein refers to an average aspect ratio of 50, preferably 100, particles of the respective anisotropic nanoparticles as measured in accordance with the below-mentioned measurement method.

"Aspect ratio", as used herein, relates to the ratio between sizes in different dimensions of a three-dimensional object, more particularly the ratio of the longest side to the shortest side, for example length to width. Ball-shaped or spherical particles therefore have an aspect ratio of about 1, while fibres, needles or flakes tend to have aspect ratios of more than 10, as they have in relation to their length a comparable small diameter or thickness. The aspect ratio can be determined by scanning electron microscopy (SEM) measurements. As the software, "Analysis pro" from Olympus Soft Imaging Solutions GmbH can be used. Depending on the size of the measured object, the magnification could be between x250 and x25000 and the aspect ratio is a mean value obtained by measuring the width and the length of at least 50, preferably 100 particles in the picture.

It is believed that higher aspect ratio provides a further improvement in performance, achieving lower sheet resistance, while maintaining the same or even lower particle loading in the composition. According to percolation threshold theory, the greater the aspect ratio of the anisotropic particles, the lower the needed quantity (by weight) to obtain a highly conductive network in the dry film. Lower quantity of the anisotropic particles in the composition is beneficial in order to provide good optical properties. Furthermore, low quantity of the anisotropic particles also reduces the cost of the composition.

For example suitable commercially available silver anisotropic nanoparticles for use in the present invention are manufactured by Kechuang, Nanogap, Aiden, Seashell and Bluenano.

A conductive coating composition according to the present invention comprises plurality of anisotropic nanoparticles from 0.03 to 1% by weight of the total weight of the conductive coating composition, preferably from 0.04 to 0.5%, more preferably from 0.06 to 0.14%, and most preferably from 0.08 to 0.1 %.

Too high concentration of anisotropic nanoparticles in the composition will lead to a decrease of the optical properties. On the other hand, too low concentration of anisotropic particles prevents the formation of the continuous network of anisotropic nanoparticles in the material and the electrical performance decreases significantly.

A conductive coating composition according to the present invention has methacrylate resin and anisotropic particle ratio from 1 to 6, preferably from 1.5 to 3, more preferably from 1.5 to 2. By this ratio, it is meant that how many grams of methacrylate resin is per grams of the anisotropic nanoparticles.

Electrical and optical properties of the conductive composition can be modified by changing the ratio between the anisotropic nanoparticles and the methacrylate resin. In order to have very good conductive material, more anisotropic nanoparticles per unit of the methacrylate resin is required. However, to gain optimal optical properties, this ratio should be lower, since the nanoparticles have a negative influence on the optical performance of the conductive composition. Overall composition performance requires a balance between these two requirements.

### Solvent

The conductive coating composition according to the present invention comprises at least one solvent.

A wide variety of known organic solvents can be used in the present invention. Suitable solvent to be used in the present invention is not specifically limited as long as it has the property to form a solution or a dispersion with the methacrylate resin. In addition, the solvent must also be able to disperse the anisotropic nanoparticles homogeneously.

A particularly suitable solvent to be used in the present invention is selected from the group consisting of isopropanol, butanol, cyclohexanol, di(propylene glycol)monomethyl ether and mixtures thereof. These preferred solvents are able to dissolve the methacrylate resin and provide excellent anisotropic particle dispersion at the same time.

A conductive coating composition according to the present invention comprises a solvent from 94% to 99.92% by weight of the total weight of the conductive coating composition, preferably from 98% to 99.90%, more preferably from 99.5 to 99.85% and most preferably from 99.75 to 99.82%.

High solvent content reduces the solid content to minimum, because higher solid content would result in a much thicker transparent conductive film, which would have excellent conductivity, however, very poor optical properties.

### Optional ingredients

In addition to above mentioned ingredients a conductive coating composition according to the present invention may further comprise additional ingredients, including, but not limited to, co-solvents, a rheology additive, a conductivity promoter, colouring agents, pigments and mixtures thereof.

The favourable interaction between alkyl-methacrylate polymers, anisotropic conductive nanoparticles and solvent allows for the stable formulation of the conductive coating compositions, which can be prepared in several ways of mixing all ingredients together.

In a preferred embodiment, the preparation of the conductive coating composition according to the present invention comprises following steps:
i) forming solution from a methacrylate resin and a solvent;
ii) mixing solution of step (i);
iii) adding to the dispersion plurality of anisotropic particles and mixing.

Preferably, mixing of steps ii) and iii) are done by using Hauschild DAC 150 SP speedmixer for 1 min at 3000 rpm.

The present invention also relates to a cured reaction product of the conductive coating composition according to the present invention. Curing of the conductive coating composition can be done by thermal cure.

The present invention also relates to a coated substrate comprising a layer of conductive coating composition according to the present invention, wherein said layer is thermally cured or dried. Said layer of coating composition according to the present invention provides a transparent conductive film.

In a preferred embodiment, the preparation of the coated substrate according to the present invention comprises following steps:
i) forming a conductive coating composition according to the present invention;
ii) applying said conductive coating composition on the surface of a substrate;
iii) drying or thermally curing said conductive coating composition.

A conductive coating composition according to the present invention can be dried at 60-200 °C for 4-15 min to obtain the transparent conductive film, preferably at 70 - 150 °C for 4-15 min, more preferably at 80 - 130 °C for 4-15 min, and most preferably at 100 - 120 °C for 4-15 min. A formed film consists of a conductive anisotropic particle network embedded in a polymer matrix with good humidity barrier resistance,

A conductive coating composition according to the present invention can be applied onto a substrate by various techniques, including but not limited to slot die, dip, rod, knife over edge casting, reverse gravure, gravure, screen, and flexographic printing. In a preferred embodiment the conductive coating composition according to the present invention is applied by screen printing and/or rod coating.

Suitable substrate for use in the present invention is rigid or flexible transparent material, preferably said substrate is selected from the group consisting of glass, polyethylene terephthalate (PET), polymethylmethacrylate (PMMA), polycarbonate (PC), glass with inorganic or organic surface treatment, PET with inorganic or organic surface treatment, PMMA with inorganic or organic surface treatment, PC with inorganic or organic surface treatment and mixtures thereof.

Said transparent conductive film is formed conductive coating composition according to the present invention, and has a wet film thickness from 5 µm to 500 µm, preferably from 10 µm to 100 µm, and more preferably from 25 µm to 50 µm, depending on the deposition method. If the wet film thickness is greater than 500 µm it would result in a much thicker transparent conductive film, with excellent conductivity, however, with poor optical properties.

After drying, the resulting transparent conductive film has a thickness in the 100-500 nm range.

A conductive coating composition according to the present invention can be used in transparent electrode or conductor applications.

A conductive coating composition according to the present invention can be used as an ITO replacement in transparent electrode or conductor applications or as an electroluminescent lighting or as a transparent electrode in flexible or rigid touch panels or OLED displays or smart windows or transparent heaters or thin film photovoltaics or dye sensitized photovoltaics or organic photovoltaics or electromagnetic interference shielding or electrostatic discharge or membrane switches.

A conductive coating composition according to the present invention is suitable for use in smart phones, tablets, computer monitors, automotive displays, displays, solar cells, TV, Industrial monitors.

Preferably, the thin film that is formed from the conductive coating composition according to the present invention provides high transparency (T), low haze (H), low colour (b*) and low sheet resistance (Rs).

It is preferred that the film formed from the conductive coating composition according to the present invention has low sheet resistance, in fact it is preferred to be as low as possible, in order to provide good electrical conductivity.

Preferably, the film formed from the conductive coating composition according to the present invention has a sheet resistance from 20 to 1000, Ω/sq, more preferably from 50 to 200 Ω/sq, and most preferably from 70 to 100 Ω/sq.

Sheet resistance is defined as the resistance of a two-dimensional film of homogenous thickness, where the thickness is negligible when compared to the width and length.

Sheet resistance is measured directly on the dry film using a portable surface resistivity meter (R-check RC2175 from EDTM, USA).

Preferably, the film formed from the conductive coating composition according to the present invention has a haze from 0.2% to 5%, wherein haze is measured according to ASTM D1003-11, preferably from 0.5% to 1.7% and more preferably from 0.5 to 1.

Haze is defined as the percentage of incident light that is scattered by the transparent conductive film.

A *BYK* gardener haze - gard plus is used to measure the haze of the films according to ASTM D1003-11. In general, the normalized haze value of a film (H) is calculated from H = H_{T} - H_{S}. Where H_{T} is the total haze of the substrate plus the conductive film and H_{S} is the reference haze value of the PET substrate. Each film value is calculated from the average of five measurements.

Preferably, the film formed from the conductive coating composition according to the present invention has as high transparency as possible. Transparency is the physical property of allowing light to pass through the material without being absorbed, scattered, or reflected.

Preferably, the film formed from the conductive coating composition according to the present invention has a transparency of at least 88%, wherein transparency is measured according to ASTM E 1348-11, preferably at least 90%, preferably from 97% to 99%, more preferably from 98% to 99%.

The transparency of the film is defined as the transmittance at a wavelength of 550 nm, which is measured using an *Analytik Jena* specord s600 according to ASTM E1348-11. In general, the normalized transmittance value of a film (T) is calculated from T = (T_{T}/T_{S})·100, wherein T_{T} is the total transmittance of the transparent conductor plus the PET substrate and T_{S} is the reference transmittance value of the PET. Each film value is calculated from the average of at least three measurements.

Preferably, the film formed from the conductive coating composition according to the present invention has b* coordinate value less than 2, preferably less than 1.85. b* coordinate is measured by using *BYK* 6834 spectro-guide sphere gloss, according to ASTM D2244.

By the colour is meant herein the b* coordinate of the CIEL*a*b* colour space.

The sample is placed on a white reference and the b* is measured. In general, the normalized b* value of a film (*b**) is calculated from *b** = *b*_{T} - b*_{S},* wherein *b*_{T}* is the b* of the TC + PET film and *b*_{S}* is the reference b* value of the PET. Each film value is calculated from the average of at least three measurements.

Moreover, the film formed from the conductive coating composition according to the present invention has also good mechanical properties, good adhesion to polyethylene terephthalate (PET) substrate, and provides good moisture barrier properties and good UV resistance.

In one embodiment, the conductive coating composition according to the present invention is transparent and can be screen-printed. When a conductive coating composition is screen printed, the formed coating has less than 5% decrease in optical and electrical performance after 168 hours exposed to 85% RH / 85°C weathering test. 85% RH / 85°C weathering test is described in detail in the example section below.

In one embodiment, the conductive coating composition according to the present invention is transparent and can be screen-printed. When the conductive coating composition is screen printed, the formed coating has less than 10% decrease in optical and electrical performance after 500 hours exposed to UVA according to ASTM 4587 test method.

In one embodiment, the conductive coating composition according to the present invention is transparent and can be screen-printed. When the conductive coating composition is screen printed, the formed coating shows less than 15% decrease in optical and electrical performance after a double crease test.

A double crease test is performed according to the following method. The initial sheet resistance is recorded. The printed sample is folded with the conductive coating composition on the inside of the fold. A 2 kg weight is rolled over the crease. Afterwards, the printed sample is unfolded and folded a second time, now with the conductive coating composition on the outside of the crease. Again, the 2 kg weight is rolled over the crease. The sheet resistance was measured after unfolding.

### Examples

### Example 1 - Optical and electrical properties of transparent conductive coatings.

The conductive coating composition comprising 1.5% of tert-butyl methacrylate resin having a M_{w} = 120000 g/mol, 0.25% of silver nanowire anisotropic conductive nanoparticles and cyclohexanol as a solvent was prepared. The resin, anisotropic nanoparticles and solvent were mixed by using a Hauschild speedmixer for 1 minute at 3000 rpm. The composition was deposited on PET substrate (MacDermid CT7) using a 0.4 mm wire wound coil coater from BYK and were dried in a forced-air circulation oven at 120 °C for 10 min.

All parameters were measured across the whole area of the deposited film and average values are reported in table 2.

### Examples 2a and 2b - Silver Nanowire

### 2a

The conductive coating composition comprising 0.15 wt.% of tert-butyl methacrylate resin having M_{w} = 120000 g/mol, 0.1 wt.% of silver nanowire anisotropic conductive nanoparticles from Nanogap, and mixture of cyclohexanol, 2-butanol and isopropanol solvents in a 9:9:2 weight ratio was prepared. The resin, anisotropic conductive nanoparticles and solvent mixture were mixed by using a Hauschild speedmixer for 1 min at 3000 rpm. The composition was deposited on PET substrate (MacDermid CT7) by using a 2 mils wire wound coil coater from BYK and dried in a forced-air circulation oven at 120 °C for 10 min.

### 2b

The conductive coating composition comprising 0.15 wt.% of tert-butyl methacrylate resin having M_{w} = 120000 g/mol, 0.1 wt.% of silver nanowire anisotropic conductive nanoparticles from Aiden, and mixture of cyclohexanol, 2-butanol and isopropanol as solvent in a 9:9:2 weight ratio was prepared. The resin, anisotropic conductive nanoparticles and solvent mixture were mixed by using a Hauschild speedmixer for 1 min at 3000 rpm. The composition was deposited on PET substrate (MacDermid CT7) by using a 2 mils wire wound coil coater from BYK and dried in a forced-air circulation oven at 120 °C for 10 min.

All parameters were measured across the whole area of the deposited film and average values are reported in table 2.

### Examples 3a and 3b - Hydroxyalkyl-methacrylate

### 3a

The conductive coating composition comprising 1.5wt.% of a copolymer derived from methyl methacrylate, 2-hydroxyethyl methacrylate and 2-hydroxypropyl methacrylate monomers having M_{w} = 25000 g/mol, 0.25 wt% of silver nanowire anisotropic conductive particles and cyclohexanol as a solvent. The resin, anisotropic conductive nanoparticles and solvent mixture were mixed by using a Hauschild speedmixer for 1 min at 3000 rpm. The coatings were deposited on PET substrate (MacDermid CT7) using a 0.4 mils wire wound coil coater from BYK and dried in a forced-air circulation oven at 120 °C for 10 min.

### 3b

The conductive coating composition comprising 1.5 wt.% of a copolymer derived from methyl methacrylate, 2-hydroxyethyl methacrylate and 2-hydroxypropyl methacrylate monomers having M_{w} = 25000 g/mol, 0.25 wt% of silver nanowire anisotropic conductive particles and cyclohexanol as solvent. The resin, anisotropic conductive nanoparticles and solvent mixture were mixed by using a Hauschild speedmixer for 1 min at 3000 rpm. The coatings were deposited on PET substrate (MacDermid CT7) using a 0.4 mils wire wound coil coater from BYK and dried in a forced-air circulation oven at 120 °C for 10 min.

All parameters were measured across the whole area of the deposited film and average values are reported in table 2.

### Examples 4a and 4b - comparative example HPMC resin vs. tert-butyl methacrylate resin

### 4a

The conductive coating composition comprising 0.1 wt.% of tert-butyl methacrylate resin having M_{w} = 120000 g/mol, 0.07 wt.% silver nanowire anisotropic conductive particles and isopropanol solvent was prepared. The resin, anisotropic nanoparticles and solvent were mixed by using a Hauschild speedmixer for 1 minute at 3000 rpm. The composition was deposited on PET substrate (MacDermid CT7) using a 2 mils wire wound coil coater from BYK and were dried in a forced-air circulation oven at 120 °C for 10 min.

### 4b

Comparative composition comprising 0.1 wt% of HPMC resin - Methocel® 311 from Dow, 0.07 wt.% silver nanowire anisotropic conductive particles and a mixture of isopropanol, ethanol and water solvent in 15:60:25 weight ratio. The resin, anisotropic conductive particles and solvent mixture were mixed by using a Hauschild speedmixerfor 1 min at 3000 rpm. The composition was deposited on PET substrate from Kumoto using a 2 mils wire wound coil coater from BYK and dried in a forced-air circulation oven at 100 °C for 4 min.

All parameters were measured across the whole area of the deposited film and average values are reported in table 2.

### Examples 5a, 5b and 5c - Drying temperature

The conductive coating composition comprising 0.15 wt.% of tert-butyl methacrylate resin having M_{w} = 120000 g/mol, 0.1 wt.% silver nanowire anisotropic conductive particles from Aiden and isopropanol as a solvent was prepared. The resin, anisotropic conductive particles and solvent were mixed by using a Hauschild speedmixer for 1 min at 3000 rpm. The composition was deposited on PET substrate from Kumoto by using a 2 mils wire wound coil coater from BYK and dried in a forced-air circulation oven at 80 °C (example 5a), 100 °C (example 5b), and 120 °C (example 5c) for 4 min.

All parameters were measured across the whole area of the deposited film and average values are reported in table 2.

### Examples 6a, 6b, 6c, 6d and 6e - Silver nanowire concentration

The conductive coating compositions comprising tert-butyl methacrylate resin having M_{w} = 120000 g/mol, silver nanowire anisotropic conductive particles and isopropanol as a solvent were prepared. The resin and the filler concentration are listed in table 1.

**Table 1**

| Example | silver nanowire % | Resin % |
|---|---|---|
| 6a | 0.06 | 0.09 |
| 6b | 0.08 | 0.12 |
| 6c | 0.10 | 0.15 |
| 6d | 0.12 | 0.18 |
| 6e | 0.14 | 0.21 |

The resin, anisotropic conductive nanoparticles and solvent mixture were mixed by using a Hauschild speedmixer for 1 min at 3000 rpm. The compositions were deposited on PET substrates (MacDermid CT7) by using 2 mils wire wound coil coater from BYK and dried in a forced-air circulation oven at 120°C for 4 min.

All parameters were measured across the whole area of the deposited film and average values are reported in table 2, which shows that excellent optoelectrical performance can be achieved even at silver loadings below 0.1 %.

Higher silver % in the formulation corresponds to higher haze, higher colour and lower transmittance and sheet resistance values, while lower filler loadings correspond to better optical properties films (Table 2).

### Example 7 - Screen-printed transparent conductive films

The conductive coating compositions comprising 1.5 wt.% of a copolymer derived from methyl methacrylate, 2-hydroxyethyl methacrylate and 2-hydroxypropyl methacrylate resin having M_{w} = 25000 g/mol, 0.25 wt.% of silver nanowire anisotropic conductive particles and cyclohexanol as a solvent was prepared. The resin, anisotropic conductive nanoparticles and solvent were mixed by using a Hauschild speedmixer for 1 min at 3000 rpm.

The composition was screen printed on PET substrate (MacDermid CT7), containing silver bus bars to ensure a good contact point for measurements, using a DEK 248 screen printer. The snap off distance was set between 1 and 3 mm. A durometer 60 squeegee was used with a polyester screen with mesh size of 305. The solvent resistant emulsion layer is 15 µm under the knuckle. The printed test pattern contains 6 areas of different size and in different locations. The film was dried in a forced-air circulation oven at 120 °C for 10 min.

All parameters were measured across the whole area of the deposited film and average values are reported in table 2.

### Example 8

The conductive coating composition containing 1.5% of tert-butyl methacrylate resin having Mw = 120000 g/mol from Sigma Aldrich, 0.25% of silver nanowire anisotropic conductive nanoparticles from Nanogap and cyclohexanol as a solvent was prepared. The resin, anisotropic nanoparticles and solvent were mixed by using a Hauschild speedmixer for 1 minute at 3000 rpm. The composition was deposited on PET substrate (MacDermid CT7) using a 0.4 mm wire wound coil coater from BYK and were dried in a forced-air circulation oven at 120 °C for 10 min.

### Summary of the performance

**Table 2**

| Example | H (%) | SR (ohm/sq) | T (%) | b* |
|---|---|---|---|---|
| 1a | 0.8 | 69 | 99.2 | 0.6 |
| 2a | 1.5 | 150 | 95.5 | 1.0 |
| 2b | 1.0 | 100 | 99.2 | 1.1 |
| 3a | 0.9 | 110 | 98.8 | 0.8 |
| 3b | 0.9 | 72 | 99.5 | 0.8 |
| 4a | 0.8 | 102 | 98.2 | 1.1 |
| 4b | 0.6 | 206 | 98.9 | 0.7 |
| 5a | 1.0 | 93 | 94.6 | 1.2 |
| 5b | 1.1 | 104 | 91.9 | 1.5 |
| 5c | 1.1 | 51 | 90.9 | 1.4 |
| 6a | 0.5 | 83 | 96.2 | 0.8 |
| 6b | 0.8 | 49 | 99.7 | 0.7 |
| 6c | 1.2 | 48 | 96.1 | 1.0 |
| 6d | 1.5 | 32 | 99.7 | 1.8 |
| 6e | 1.7 | 33 | 98.6 | 1.3 |
| 7a | 1.2 | 92 | 98.8 | 1.1 |

Adhesion of the transparent conductive film was qualitatively tested in the laboratory by using Scotch tape tests. Nanowires were still present in the film after tape removal (this was checked by SEM) and surface resistivity remained unchanged. Scratch resistance was evaluated qualitatively in the laboratory with a pen.

## Claims

1. A conductive coating composition comprising
a) a methacrylate resin selected from the group consisting of a hydroxyalkyl methacrylate copolymer resin comprising at least one alkyl methacrylate monomer and at least one hydroxyalkyl methacrylate monomer and tert-butyl methacrylate homopolymer resin;
b) a plurality of anisotropic nanoparticles; and
c) at least one solvent.

2. A conductive coating composition according to claim 1, wherein said alkyl groups of alkyl methacrylate monomer and hydroxyalkyl methacrylate monomer are independently selected from the group consisting of methyl, ethyl, propyl, butyl, pentyl hexyl, heptyl, octyl and their ramified isomers.

3. A conductive coating composition according to claim 1 or 2, wherein said methacrylate resin has a molecular weight from 6000 to 200000 g/mol, preferably from 25000 to 150000 g/mol, and most preferably from 35000 to 120000 g/mol.

4. A conductive coating composition according to any of the claims 1 to 3, wherein said methacrylate resin has a Tg from 50 - 111 °C, preferably from 96 to 106 °C.

5. A conductive coating composition according to any of the claims 1 to 4, wherein said composition comprises a methacrylate resin from 0.05 to 5% by weight of the total weight of the conductive coating composition, preferably from 0.07 to 1.5%, more preferably from 0.09 to 0.65 and most preferably from 0.1 to 0.15%.

6. A conductive coating composition according to any of the claims 1 to 5, wherein said plurality of anisotropic nanoparticles is selected from the group consisting of silver containing particles, silver particles, copper particles, copper containing particles, silver nanowires, copper nanowires, carbon particles, carbon nanowires and mixtures thereof, preferably plurality of anisotropic nanoparticles is selected from the group consisting of silver containing particles, silver particles and silver nanowires, and most preferably anisotropic particles are silver nanowires.

7. A conductive coating composition according to any of the claims 1 to 6, wherein said plurality of anisotropic nanoparticles have an aspect ratio greater than 200, preferably from 200 to 2000, more preferably from 400 to 1500, more preferably from 500 to 1200, and most preferably from 800 to 1000.

8. A conductive coating composition according to any of the claims 1 to 7, wherein said composition comprises plurality of anisotropic nanoparticles from 0.03 to 1% by weight of the total weight of the conductive coating composition, preferably from 0.04 to 0.5%, more preferably from 0.06 to 0.14%, and most preferably from 0.08 to 0.1%.

9. A conductive coating composition according to any of the claims 1 to 8, wherein said composition has methacrylate resin and anisotropic particle ratio from 1 to 6, preferably from 1.5 to 3, more preferably from 1.5 to 2.

10. A conductive coating composition according to any of the claims 1 to 9, wherein said at least one solvent is selected from the group consisting of isopropanol, butanol, cyclohexanol, di(propylene glycol)monomethyl ether and mixtures thereof.

11. A conductive coating composition according to any of the claims 1 to 10, wherein said composition comprises a solvent from 94% to 99.92% by weight of the total weight of the conductive coating composition, preferably from 98% to 99.90%, more preferably from 99.5 to 99.85% and most preferably from 99.75 to 99.82%.

12. A cured reaction product of the conductive coating composition according any of the claims 1 to 11.

13. A coated substrate comprising a layer of conductive coating composition according to any of the preceding claims 1 to 11, wherein said layer is thermally cured or dried.

14. A coated substrate according to claim 13, wherein said substrate is rigid or flexible transparent material, preferably said substrate is selected from the group consisting of glass, polyethylene terephthalate (PET), polymethylmethacrylate (PMMA), polycarbonate (PC), glass with inorganic or organic surface treatment, PET with inorganic or organic surface treatment, PMMA with inorganic or organic surface treatment, PC with inorganic or organic surface treatment and mixtures thereof.

15. Use of conductive coating composition according to any of the preceding claims 1 to 11 in transparent electrode or conductor applications.

16. Use of conductive coating composition according to any of the preceding claims 1 to 11 as an ITO replacement in transparent electrode or conductor applications or as an electroluminescent lighting or as a transparent electrode in flexible or rigid touch panels or OLED displays or smart windows or transparent heaters or thin film photovoltaics or dye sensitized photovoltaics or organic photovoltaics or electromagnetic interference shielding or electrostatic discharge or membrane switches.
